# EUROPÄISCHE PATENTSCHRIFT

(11) **EP 0 946 836 B1**
(45) Veröffentlichungstag und Bekanntmachung des Hinweises auf die Patenterteilung: **22.09.2004**
(21) Anmeldenummer: 97954462.4
(22) Anmeldetag: 23.12.1997
(51) Int. Cl.: F16J 15/08

(54) **METALLISCHE FLACHDICHTUNG**
METALLIC FLAT SEAL
JOINT PLAT METALLIQUE

(30) Priorität: 24.12.1996 DE 19654283
(43) Veröffentlichungstag der Anmeldung: 06.10.1999
(73) Patentinhaber: REINZ-Dichtungs-GmbH, 89233 Neu-Ulm (DE)
(72) Erfinder: ERB, Wilfried, D-89231 Neu-Ulm (DE); GÖTTEL, Ralf, D-89223 Neu-Ulm (DE); HIEBLE, Franz, D-89250 Senden (DE); HÖHE, Kurt, D-89129 Langenau (DE); KATZMAIER, Hans, D-89179 Beimerstetten (DE); KÖGEL Alexander, D-89233 Neu-Ulm (DE); LEBAILLY, Thierry, D-89168 Niederstotzingen (DE); LUDWIG, Josef, D-89168 Niederstotzingen (DE); OBERMEIER, Bernhard, D-89346 Kissendorf (DE); PUSCHER, Edwin, D-89250 Senden (DE); TASCH, Dominique, 89233 Neu-Ulm (DE); UNSELD, Günther, D-89189 Neenstetten (DE); WALTENBERG, Hans-Dieter, D-89195 Steinberg (DE); WEISS, Alfred, D-89231 Neu-Ulm (DE); POPIELAS, Frank, D-89250 Senden (DE)
(74) Vertreter: Frohwitter, Bernhard, Dipl.-Ing.
(86) Internationale Anmeldenummer: PCT/EP1997/007263
(87) Internationale Veröffentlichungsnummer: WO 1998/028559

(56) Entgegenhaltungen:
- EP-A- 0 468 654
- EP-A- 0 780 561
- DE-U- 9 414 941
- US-A- 5 669 615
- PATENT ABSTRACTS OF JAPAN vol. 16, no. 169 (M-1239), 23.April 1992 & JP 04 015372 A (KAWAMURA SHUJI), 20.Januar 1992,
- PATENT ABSTRACTS OF JAPAN vol. 13, no. 287 (M-844), 30.Juni 1989 & JP 01 079471 A (UEDA KOSAKU), 24.März 1989,
- GROSCH/LUDWIG: "Neue Mehrlagen-Metall-Zylinderkopfdichtungen" MTZ MOTORTCHNISCHE ZEITSCHRIFT, Nr. 55, 31.Januar 1994, STUTTGART, Seiten 62-66, XP000423098

## Beschreibung

Die nachstehend beschriebene Erfindung betrifft metallische Flachdichtungen, insbesondere Zylinderkopfdichtungen, bestehend aus einem Laminat aus Lagen verschiedener Metallblechplatten, enthaltend einen rund um die Verbrennungskammeröffnung des Laminats angeordneten Ausgleichsbereich, ein Ausgleichsblech und ein Ausgleichsmittel, wobei sich das Ausgleichsmitel innerhalb des Ausgleichsbereichs des Laminats befindet und eine Lagendicke aufweist, die größer ist als die Lagendicke des Ausgleichsblechs wie sie außerhalb des Ausgleichsbereichs des Laminats vorliegt, und wobei die Summe der Dicke der verschiedenen Lagen im Ausgleichsbereich größer ist als im restlichen Teil des Laminats, mindestens ein elastisches Außenblech mit einer nahe dem Ausgleichsbereich des Laminats angeordneten Sicke, wobei der Randbereich des Außenblechs im Ausgleichsbereich des Laminats liegt, und gegebenenfalls ein Distanzblech.

Auf dem Gebiet der Zylinderkopfdichtungen sind in den letzten Jahren mehr und mehr Dichtungskonstruktionen, die Weichstoffmaterialien enthalten, durch Dichtungen ersetzt worden, die im wesentlichen aus Metallblechplatten bestehen. Ein Grund für diese Entwicklung liegt darin, dass das in herkömmlichen Weichstoffdichtungen üblicherweise verwendete Asbestmaterial aus gesundheits- und umwelttechnischen Gründen keine Anwendung mehr findet. Hinzu kommt, dass die Verwendbarkeit von Weichstoffdichtungs-Konstruktionen für moderne Hochleistungsmotoren, etwa mit Turboladern aufgeladene Motoren, aufgrund ihrer geringeren Standfestigkeit und Elastizität Einschränkungen unterworfen ist. Schließlich bieten metallische Dichtungen gegenüber Weichstoffdichtungen auch Vorteile im Hinblick auf Entsorgung bzw. Recycling.

Heutige metallische Flachdichtungen für Verbrennungsmotoren bestehen üblicherweise aus Laminaten, die sich aus mehreren Lagen von Metallblechplatten zusammensetzen. Ein Problem bei solchen Dichtungen besteht darin, dass durch die punktuelle Einleitung der Schraubenkräfte im eingebauten Zustand Zylinderkopf und Zylinderblock dazu neigen, sich zu verziehen, so dass der Abstand des Zylinderkopfes zum Zylinderblock im Bereich der Verbrennungskammeröffnungen größer ist als im Bereich der Zylinderkopfschrauben. Dieses Problem tritt insbesondere bei den heutzutage im Motorenbau mehr und mehr verwendeten Zylinderköpfen aus Aluminium auf, die eine geringere Materialsteifigkeit gegenüber Zylinderköpfen aus Graugussmaterial aufweisen. Entsprechend führt ein einfaches Laminat aus verschiedenen Lagen von Metallblechplatten aufgrund seiner im Vergleich zu Weichstoffdichtungen relativ geringen Verformbarkeit und Elastizität nicht zu einer befriedigenden Abdichtung.

Um diesem Problem zu begegnen, enthalten metallische Dichtungen zumeist elastische Mittel im Bereich der Durchgangsöffnungen. Dabei handelt es sich in der Regel um Halbsicken, Sicken oder Kantungen in den Metallblechplatten der Laminate, die zu einer linienförmigen, elastischen Abdichtung rund um die Durchgangsöffnungen führen.

Ein weiteres Problem besteht darin, dass der abzudichtende Spalt zwischen Zylinderkopf und Zylinderblock bei einer Verbrennungskraftmaschine durch die schnellen Druck- und Temperaturschwankungen oszilliert, und die Dichtung dadurch insbesondere im Bereich der Verbrennungskammeröffnungen ständig wechselnden Pressungsdrücken ausgesetzt ist ("Beating"). Dieser Effekt vermindert die Haltbarkeit von um die Zylinderdurchgangsöffnungen angeordneten elastischen Mitteln, z.B. Sicken.

Aus der EP-A-0 230 804 sind gattungsgemäße metallische Flachdichtungen bekannt, die innerhalb des Metallblechlaminats eine Ausgleichsplatte enthalten. Der Rand der Ausgleichsplatte wird im Bereich der Dichtung, der den Dichtspalt gegenüber der Verbrennungskammer abschließt, vollständig auf sich selbst oder auf eine Zwischenplatte gefalzt, wodurch ein Ausgleichsmittel bzw. Stopper entsteht. Die Bildung des Stoppers führt zu einem Ausgleichsbereich im Laminat, der sich durch eine insgesamt größere Dicke der verschiedenen Lagen gegenüber dem restlichen Teil der Dichtung auszeichnet. Durch den Stopper bzw. den Ausgleichsbereich wird die durch die Schraubenanzugskräfte verursachte erhöhte Spaltweite im Bereich der Verbrennungskammeröffnungen ausgeglichen.

Zusätzlich weisen die Dichtungen von EP-A-0 230 804 ein mit einer Sicke versehenes, elastisches Außenblech auf, wobei die Sicke angrenzend an den Ausgleichsbereich rund um die Verbrennungskammeröffnung angeordnet ist.

Bei den vorstehend genannten Dichtungen wird eine elastische Dichtlinie nur im Bereich der außerhalb des Ausgleichsbereiches liegenden Sicken der Außenbleche erhalten. Der Ausgleichsbereich mit Stopper verhindert im angezogenen Zustand der Dichtung die vollständige Abflachung der Sicken, bietet jedoch im Hinblick auf seine eigene Funktion als erste Dichtlinie keine Elastizität. Entsprechend kann die Sicke des Außenblechs beim Auftreten des Beating-Effekts von Verbrennungsgasen und -rückständen beaufschlagt werden, was sich nachteilig auf ihre Dichtfunktion auswirken kann. Um den Beating-Effekt zu minimieren, müssen entsprechend hohe Schraubenkräfte bzw. Stopper-Überstände angewandt werden, was zu unerwünschten Verzügen der Motorbauteile führen kann.

Eine weitere gattungsgemäße Flachdichtung ist aus dem deutschen Gebrauchsmuster G 94 14 941 bekannt. Die dort beschriebenen Flachdichtungen enthalten vorgekantete Zwischenbleche, die durch die Kantungen eine Elastizität aufweisen. Die Kantungen befinden sich im Bereich der Sicken der gesickten Außenbleche. Entsprechend konzentrieren sich nach Einbau der Dichtung die innerhalb des Laminats entstehenden Dichtlinien nicht in definierten, funktionell getrennten Bereichen, sondern verteilen sich über verschiedene Bereiche des Laminats. In JP-A-04 015 372 ist eine gattungsgemäße Metalldichtung beschrieben, bei welcher zwischen zwei eine Sicke aufweisenden Außenplatten eine Mittelplatte angeordnet ist, deren Endbereiche im eigentlichen Dichtungsbereich um beispielsweise einen Brennraum eines Motors liegen und unter Belassung eines kleinen ösenförmigen radialen Teiles auf sich selbst so gefaltet sind, dass der umgefaltete Teil auf dem ungefalteten Teil dicht aufliegt. Lediglich der kleine ösenförmige radiale Teil weist eine gewissen Elastizität zur Aufnahme von bestimmten Maschinendeformationen zur Sicherung des Dichtdruckes auf, ist jedoch aufgrund seiner starken Verformung härter als das umgebende Material, wodurch Spannungsspitzen in diesem Bereich des ösenförmigen Teiles auftreten können.

Entsprechend besteht eine Aufgabe der vorliegenden Erfindung darin, die vorstehend genannten Nachteile des Standes der Technik zu überwinden. Eine weitere Aufgabe besteht darin, metallische Flachdichtungen bereitzustellen, die trotz einfacher Bauweise eine befriedigende Abdichtung erzielen.

Diese und weitere Aufgaben werden durch eine metallische Flachdichtung mit den Merkmalen gemäß Anspruch 1 gelöst. Zweckmäßige Weiterbildungen sind in den abhängigen Ansprüchen definiert.

Bei den erfindungsgemäßen Dichtungen handelt es sich um metallische Flachdichtungen. Dies schließt nicht aus, dass die Dichtungen Weichstoffbeschichtungen aufweisen ("Coating"), z.B. um die Dichteigenschaften zu verbessern. Bei solchen Beschichtungen kann es sich um Polymerbeschichtungen handeln, die für diese Zwecke üblicherweise eingesetzt werden. Darüber hinaus können die Dichtungen an bestimmten Stellen elastomere Dichtelemente enthalten, wie etwa Gummiwülste, z.B. zur Abdichtung von Durchgangsöffnungen für Kühl- oder Schmierflüssigkeit.

Die erfindungsgemäßen Dichtungen sind Laminate aus Lagen verschiedener Metallblechplatten. Solche Laminate können z.B. verschiedene Bleche umfassen, die durch Umbördeln der Blechränder miteinander verbunden sind. Das Laminat kann auch durch einfaches Übereinanderlegen verschiedener Metallblechplatten erhalten werden. Die einzelnen Bleche des Laminats werden dann vorzugsweise durch Metallösen oder durch Niete, Kaltniete, Kleben oder Schweißen zusammengehalten. Es ist jedoch auch möglich, das Dichtungslaminat durch Übereinanderlegen der einzelnen Platten erst während des Einbaus der Dichtung zu erhalten. In diesem Fall erfolgt die Ausrichtung der Platten beispielsweise mittels der Zylinderbolzen oder mittels Passstiften. Der im Zusammenhang mit der vorliegenden Erfindung gebrauchte Begriff "Metallblechplatten" schließt auch solche Elemente des Dichtungslaminats ein wie Bördelbleche, Metallringe (gegebenenfalls gesickt) oder Federringe.

Rund um die Verbrennungskammeröffnung, bzw. im Falle von Dichtungen für Motoren mit mehreren Zylindern, rund um die Verbrennungskammeröffnungen weisen die erfindungsgemäßen Dichtungen einen Ausgleichsbereich auf. Mit Ausgleichsbereich ist der Bereich des Laminats gemeint, bei dem die Summe der Dicke der verschiedenen Lagen von Metallblechplatten größer ist, als im restlichen Teil des Dichtungslaminats, wobei damit nicht ausgeschlossen ist, dass z.B. Metallösen oder Niete, die das Laminat zusammenhalten, eine Dicke aufweisen, die der des Ausgleichsbereichs entspricht, oder sogar noch darüber hinausgeht, sofern sie sich in einem nicht-gepreßten Bereich der Dichtung befinden. Auch ist dadurch nicht ausgeschlossen, dass benachbarte Metalllagen im Ausgleichsbereich des Laminats nicht in direktem Kontakt miteinander stehen. Da die Dichtung im Bereich des Ausgleichsbereichs die größte Metalllagendicke aufweist, wird nach Einbau der Dichtung ein Ausgleich der durch die Schraubenanzugskräfte verursachten erhöhten Spaltweite im Bereich der Verbrennungskammeröffnung erreicht.

In einer bevorzugten Ausfühnmgsform sind alle Metallblechplatten des Laminats an der Ausbildung des Ausgleichsbereiches beteiligt. Das bedeutet, dass im Bereich der Verbrennungskammeröffnung die Randbereiche aller am Aufbau des Laminats beteiligten Metallblechplatten innerhalb des Ausgleichsbereiches des Laminats liegen. In einer anderen vorteilhaften Ausführungsform ist es auch möglich, dass sich die um die Verbrennungskammeröffnung angeordneten Randbereiche bestimmter Metallblechplatten des Laminats nicht bis in den Ausgleichsbereich erstrecken.

Eine Dichtung gemäß der Erfindung enthält ein Ausgleichsblech und ein Ausgleichsmittel, wobei in einer bevorzugten Ausführungsform das Ausgleichsblech mit dem Ausgleichsmittel versehen ist. Vorzugsweise nimmt das Ausgleichsblech mit einem im Ausgleichsbereich gelegenen Randbereich an der Ausbildung des Ausgleichsmittels teil. Vorteilhaft ist es auch, das Ausgleichsmittel insgesamt aus dem Ausgleichsblech zu bilden. In diesen Fällen ist es bevorzugt, ein Ausgleichsblech aus einem elastischen Material zu verwenden, z.B. Federstahl, das über gute Rückfederungseigenschaften verfügt. Es ist aber auch möglich, dass das Ausgleichsmittel ein vom Ausgleichsblech verschiedenes Bauteil der Dichtung ist. Vorteilhaft ist in diesem Falle z.B. ein durch Löten, Verschweißen, Verkleben oder Verstemmen am Ausgleichsblech angebrachtes Bauteil, das dann als Ausgleichsmittel dienen kann. In diesem Falle muss das Ausgleichsblech nicht notwendigerweise an der Ausbildung des Ausgleichsmittels beteiligt sein, und kann auf einen nicht im Ausgleichsbereich des Laminats gelegenen Teil reduziert werden.

Das Ausgleichsmittel weist eine Lagendicke auf, die größer ist, als die Lagendicke des Ausgleichsblechs wie bestimmt im Bereich außerhalb des Ausgleichsbereichs des Laminats. Anders ausgedrückt weist das Ausgleichsmittel eine größere Lagendicke auf, als der nicht im Ausgleichsbereich des Laminats gelegene Teil des Ausgleichsblechs. Die erhöhte Lagendicke des Ausgleichsmittels kann z.B. durch Umbördeln des im Ausgleichsbereich des Laminats gelegenen Randbereichs des Ausgleichsblechs erreicht werden, wobei der Randbereich durch das Umbördeln nicht notwendigerweise in direkten Kontakt mit dem Blech kommen muss, auf das er zurückgefaltet wurde. Vorzugsweise steht nach dem Umbördeln wenigstens ein Teil des umgebördelten Randbereiches nicht in Kontakt mit diesem Blech. Bei dem Blech, auf das der Randbereich zurückgefaltet wurde, handelt es sich entweder um das Ausgleichsblech oder um ein Distanzblech.

Das Ausgleichsmittel befindet sich innerhalb des Ausgleichsbereiches des Laminats. Der Ausgleichsbereich des Laminats erstreckt sich in der von der Verbrennungskammeröffnung abgewandten Richtung bis zum Ende des Ausgleichsmittels. Das bedeutet, dass sein Beginn auf seiner der Verbrennungskammer abgewandten Seite durch das Ausgleichsmittel definiert wird. Das Ausgleichsmittel trägt dazu bei, dass die Summe der Dicke der verschiedenen Lagen im Ausgleichsbereich größer ist als im restlichen Teil des Laminats. Es ist auch denkbar, dass die erhöhte Dicke im Ausgleichsbereich durch mehr als ein mit Ausgleichsmitteln versehenes Ausgleichsblech bereitgestellt wird. Bevorzugt ist die Verwendung eines einzelnen Ausgleichsblechs, bzw. Ausgleichsmittels.

Die erfindungsgemäßen Dichtungen enthalten weiterhin mindestens ein elastisches Außenblech, in dem nahe dem Ausgleichsbereich des Laminats eine Sicke angeordnet ist. Die Sicke im Außenblech bildet nach Einbau der Dichtung eine zweite elastische Dichtlinie, die durch die mittels des Ausgleichsbereiches des Laminats gebildete erste Dichtlinie geschützt wird.

Bei dem elastischen Außenblech handelt es sich vorzugsweise um einen elastischen Stahl, z.B. Federstahl. Bei der im Außenblech nahe dem Ausgleichsbereich rund um die Verbrennungskammer geformten Sicke kann es sich um eine geschlossene Sicke handeln (Voll-Sicke) oder bei Bedarf auf um eine offene Sicke (auch Halb-Sicke genannt). Die Sicke im Außenblech kann mit ihrem Fußpunkt mit dem Zylinderkopf, bzw. dem Zylinderblock in Kontakt stehen. Es ist aber auch möglich, dass Zylinderblock bzw. Zylinderkopf nach Einbau der Dichtung in Kontakt mit dem Scheitelpunkt der Sicke treten. Wenn zwei gesickte Außenbleche verwendet werden, können deren Sicken sowohl parallel als auch in entgegengesetzter Orientierung relativ zur Sicke des jeweils anderen Außenblechs angeordnet sein. Bei Verwendung von zwei gesickten Außenblechen stehen sich die Sicken vorzugsweise jeweils gegenüber, d.h. sie weisen jeweils den gleichen Abstand zum Ausgleichsbereich der Dichtung auf. Die Außenbleche können mehrere Sicken enthalten, wobei jedoch die Verwendung von jeweils nur einer Sicke bevorzugt ist.

Der Randbereich des gesickten elastischen Außenblechs liegt im Ausgleichsbereich des Laminats, und trägt zur Bildung dieses Bereichs bei. In einer bevorzugten Ausführungsform wird der Randbereich nach außen hin, d.h. zum Zylinderkopf oder Zylinderblock hin, nicht durch eine andere Metallblechplatte des Laminats abgedeckt, etwa durch eine Umbördelung. Andere bevorzugte Ausführungsformen der Erfindung umfassen jedoch auch Dichtungen, bei denen der Rand eines Metallblechs des Laminats so umgebördelt ist, dass der Randbereich des gesickten elastischen Außenblechs gegenüber dem Zylinderkopf oder dem Zylinderblock durch diesen umgebördelten Rand abgedeckt wird.

Die erfindungsgemäßen Dichtungen können zusätzlich zu einem Ausgleichsblech und einem oder mehreren elastischen Außenblechen Distanzbleche enthalten. Solche Distanzbleche tragen zur Dickenbildung des Dichtungslaminats bei. Sie sind insbesondere geeignet, um Bauhöhenunterschiede auszugleichen, die beim Ersatz von Weichstoffdichtungen durch Metalldichtungen relevant sein können.

Erfindungsgemäß ist das Ausgleichsmittel im Ausgleichsbereich des Laminats mit elastischen Mitteln versehen. Für den Fall, dass das Ausgleichsmittel durch Umbördeln des Randbereichs des Ausgleichsbleches gebildet wird, wird ein elastisches Mittel dadurch erhalten, dass wenigstens ein Teil des umgebördelten Randbereiches nicht mit dem Teil des Ausgleichsblechs oder des Distanzblechs in Kontakt steht. Zu diesem Zweck sollte das Material des Ausgleichsblechs vorzugsweise aus einem elastischen, rückfedernden Material bestehen.

In einer vorteilhaften Ausführungsform wird dabei die Umbördelung so vorgenommen, dass der umgebördelte Randbereich mit dem Teil des Ausgleichsblechs, auf das der Randbereich zurückgefaltet ist, einen Hohlraum bildet, der in etwa die Form eines a aufweist. Durch die Wahl eines elastischen Materials für das Ausgleichsblech wirkt das den α-förmigen Hohlraum umgebende Blech als Feder und verleiht dem Ausgleichsbereich die gewünschte Elastizität.
Vorteilhaft ist es auch, das durch Umbördelung erhaltene Ausgleichsmittel mit zusätzlichen Sicken oder Kantungen zu versehen, wodurch die Elastizitätseigenschaften erhöht werden. Geeignet für eine Einlage aus elastischem Dichtungsmaterial sind beispielsweise Verbundmaterial, expandierte Graphitfolie, Glimmerfolie oder ein temperaturbeständiges Elastomer oder Harz.

Zusätzlich zu den obengenannten Distanzblechen, oder an ihrer statt, können die erfindungsgemäßen metallischen Flachdichtungen ferner ein Distanzblech enthalten, das in seinem im Bereich der Verbrennungskammeröffnungen gelegenen Randbereich ebenfalls mit einem elastischen Mittel versehen ist. Bei diesem elastischen Mittel kann es sich ebenfalls um Sicken (inklusive Halb-Sicken) und Kantungen handeln. Der hier in Bezug genommene Randbereich des mit einem elastischen Mittel versehenen Distanzblechs ist dabei nicht notwendigerweise auf den Ausgleichsbereich des Laminats beschränkt. Zum Beispiel liegt bei einer bevorzugten Ausführungsform eine im Randbereich des Distanzblechs eingeführte Kantung außerhalb des Ausgleichsbereiches des Laminats. Der mit dem elastischen Mittel versehene Randbereich des Distanzblechs erstreckt sich jedoch nicht in der der Brennraumkammeröffnung entgegengesetzten Richtung über den Bereich der Sicken der Außenbleche hinaus. In bevorzugten Ausführungsformen der Erfindung ist das Distanzblech im Bereich der Sicken der Außenbleche frei von elastischen Mitteln. Wenn es sich bei den elastischen Mitteln um Sicken oder Kantungen handelt, wird für das Distanzblech vorzugsweise ein Material mit einer gewissen Elastizität gewählt. Die erforderliche Elastizität kann hier jedoch bereits durch weichere Bleche, wie Kupferblech, erhalten werden.

Als elastisches Mittel, mit dem der obengenannte Randbereich des Distanzblechs versehen ist, kann auch eine Auflage aus elastomerem Dichtmaterial verwendet werden. Vorteilhaft ist auch das Anbringen eines Federrings an das Distanzblech, vorzugsweise versehen mit einer Sicke in den beiden äußeren Blechlagen.

Die erfindungsgemäßen metallischen Flachdichtungen können auch ein Distanzblech enthalten, das im obengenannten Randbereich mit einem plastisch verformbaren Mittel versehen ist. Als solches Mittel geeignet ist beispielsweise ein auf beiden Seiten eines aus verformbarem Material hergestellten Distanzblech angebrachtes, wellenförmiges Profil, etwa gebildet aus V-förmigen Rillen, wobei der Abstand der sich jeweils auf den verschiedenen Seiten des Distanzblechs gegenüberliegenden Spitzen, die durch die V-förmigen Rillen gebildet werden, größer ist, als die Blechstärke des Distanzblechs außerhalb des Randbereichs. Je nach Ausbildung der V-förmigen Rillen kann die Verformbarkeit des plastischen Mittels auch zu einem gewissen Grad elastischen Charakter aufweisen.

Die erfindungsgemäßen metallischen Flachdichtungen können auch ein Distanzblech enthalten, das im obengenannten Randbereich mit plastischelastisch verformbaren Mitteln versehen ist. Als solche Mittel eigenen sich beispielsweise Sicken, die dem Randbereich des Distanzblechs Elastizität verleihen, und an ihren Fußpunkten und Scheitelpunkten plastisch verformbare Wülste aufweisen, oder Verdickungen, in deren Bereich die Blechstärke des Distanzblechs größer ist als die Blechstärke außerhalb des Randbereichs des Distanzblechs.

Die Erfindung wird nachfolgend anhand von in Zeichnungen dargestellten Ausführungsbeispielen näher erläutert.
Fig. 1 zeigt eine Aufsicht auf einen Teil einer Flachdichtung.
Fig. 2 zeigt einen Querschnitt durch eine Zylinderkopfdichtung gemäß dem Stand der Technik.
Figuren 3 - 7 zeigen Querschnitte durch bevorzugte erfindungsgemäße Dichtungen.
Fig. 8 zeigt geeignete Ausgleichsplatten zur Verwendung in den bevorzugten Dichtungen.
Fig. 9 zeigt einen Querschnitt durch eine weitere bevorzugte Ausführungsform einer erfindungsgemäßen Dichtung.

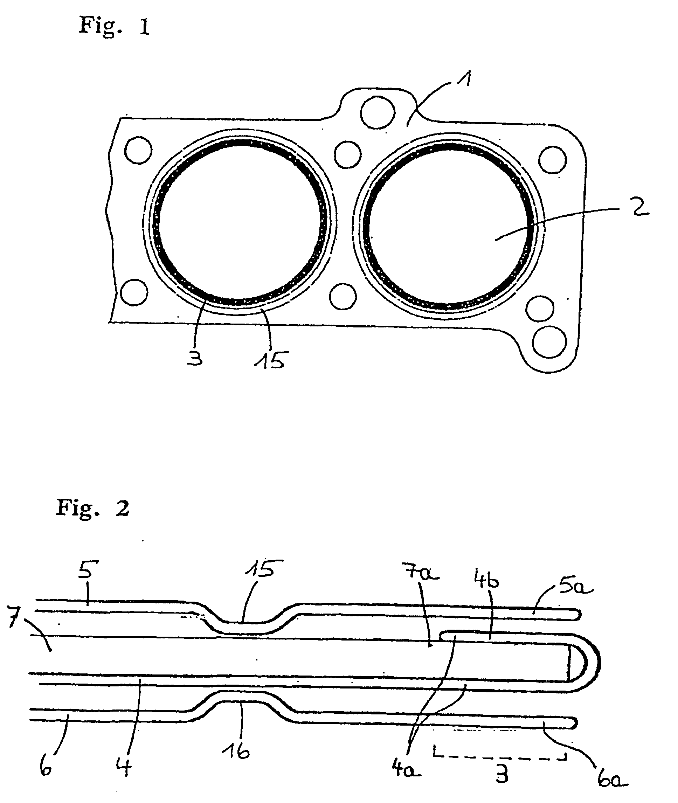

Fig. 1 zeigt eine Aufsicht auf eine Zylinderkopfdichtung 1 gemäß der Erfindung. Eine solche Dichtung weist u.a. eine Verbrennungskammeröffnung 2 auf, die von einem Ausgleichsbereich 3 eingeschlossen ist, der im eingebauten Zustand den Spalt zwischen Zylinderkopf und Zylinderblock gegenüber der Verbrennungskammer abschließt. Unmittelbar angrenzend an den Ausgleichsbereich 3, jedoch nicht mit ihm überlappend, liegt einzweiter elastischer Dichtbereich, der durch eine Sicke 15 gebildet wird.

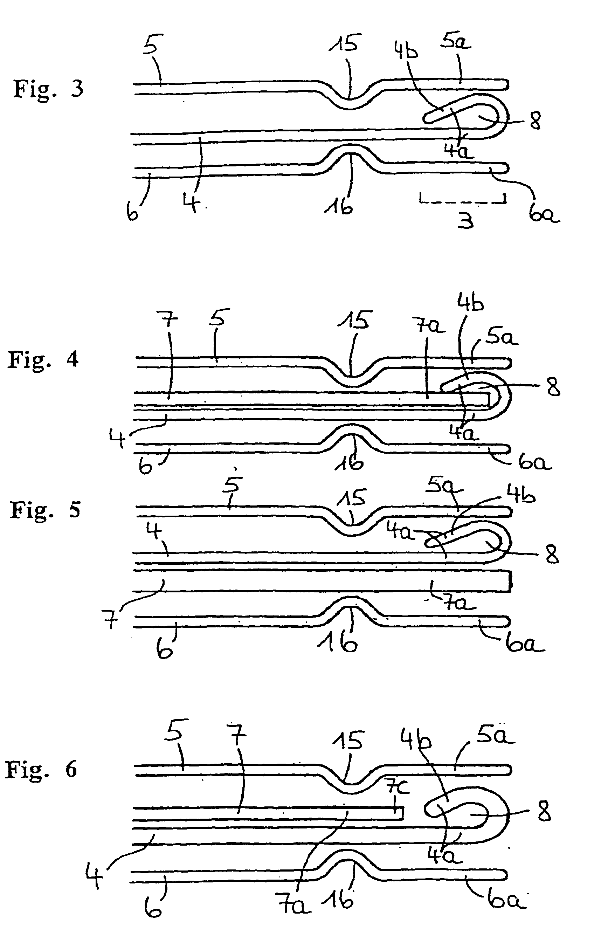

Ein Querschnitt durch eine gattungsgemäße, aus dem Stand der Technik bekannte Zylinderkopfdichtung im Bereich der Verbrennungskammeröffnung ist Fig. 2 zu entnehmen. Auf der rechten Seite der Zeichnung schließt sich die Verbrennungskammeröffnung an. Die linke Seite der Zeichnung stellt den Übergang in die metallische Flachdichtung dar. Im eingebauten Zustand schließt sich oben an die dargestellte Dichtung der Zylinderkopf, und unten der Zylinderblock an. Diese Orientierung gilt durchgehend für alle Figuren 2 -9. Ebenso werden die in Fig. 1 und 2 verwendeten Bezugszeichen in den nachfolgenden Figuren 3 - 9 beibehalten, soweit es die den in Fig. 1 und 2 in Bezug genommenen Dichtungsteilen entsprechenden Teile betrifft.

Die Dichtung von Fig. 2 enthält ein Ausgleichsblech 4 mit einem Randbereich 4b, der in die der Verbrennungskammeröffnung entgegengesetzten Richtung umgebördelt ist. Durch das Umbördeln des Randbereichs 4b wird das Ausgleichsmittel 4a gebildet, das sich aus dem Randbereich 4b und dem darunterliegenden Teil des Ausgleichsblechs 4 zusammensetzt. Durch das Umfalzen erhält das Ausgleichsmittel 4a eine größere Lagendicke als der außerhalb des Ausgleichsmittels gelegene Teil des Ausgleichsblechs 4. Bei dem so erhaltenen Ausgleichsmittel 4a handelt es sich um einen unelastischen Stopper, da der Randbereich 4b in einer Weise umgebördelt ist, die zu einem vollständigen Kontakt mit dem darunterliegenden Blech über den gesamten Bereich des Randbereiches 4b führt.

Die Dichtung enthält weiterhin zwei elastische Außenbleche 5, 6 mit Randbereichen 5a, 6a und ein Distanzblech 7 mit einem Randbereich 7a, auf den der Randbereich 4b zurückgefalzt ist. Das Distanzblech dient zur Erreichung einer größeren Bauhöhe, die erforderlich ist, wenn die Dichtung in Motoren eingesetzt wird, die im Hinblick auf die früher gebräuchlichen, deutlich dickeren Weichstoffdichtungen konstruiert wurden.

Die Randbereiche 5a, 6a, 7a der Außenbleche bzw. des Distanzblechs bilden zusammen mit dem Ausgleichsmittel 4a den Ausgleichsbereich 3 des Dichtungslaminats.

Der Ausgleichsbereich 3 wird in seiner Erstreckung in Richtung des Übergangs in die metallische Flachdichtung durch das Ende des Randbereichs 4b des Ausgleichsblechs 4 bzw. durch das in dieser Richtung gelegene Ende des Ausgleichsmittels 4a bestimmt. Er zeichnet sich dadurch aus, dass die Summe der Blechstärken des Laminats in diesem Bereich größer ist als im restlichen Teil des Laminats. Im eingebauten Zustand bildet der Ausgleichsbereich eine erste, nicht-elastische Dichtlinie.

Die elastischen Außenbleche 5, 6 weisen Sicken 15, 16 auf, die außerhalb des Ausgleichsbereiches 3 liegen, jedoch nahe an ihn angrenzen. Im eingebauten Zustand bilden die Sicken eine zweite, elastische Dichtlinie und werden durch den nicht-elastischen Stopper- bzw. Ausgleichsbereich vor einer vollständigen Abflachung, und damit vor einem Verlust ihrer Elastizität, bewahrt.

Fig. 3 zeigt eine bevorzugte, erfindungsgemäße Dichtung, die aus einem Laminat aus zwei elastischen Außenblechen 5, 6 mit Sicken 15, 16 und einem Ausgleichsblech 4 besteht. Der Randbereich 4b des Ausgleichsblechs 4 ist in die der Verbrennungskammeröffnung entgegengesetzten Richtung umgebördelt und stellt zusammen mit dem Teil des Ausgleichsblechs 4, auf das er zurückgefaltet ist, ein Ausgleichsmittel 4a bereit, das zusammen mit den Randbereichen 5a, 6a der elastischen Außenbleche 5, 6 einen Ausgleichsbereich 3 bildet.

Das Umbördeln geschieht dabei so, dass der Randbereich 4b nicht mit dem darunterliegenden Teil des Ausgleichsblechs 4 in Kontakt steht. Der Randbereich 4b bildet zusammen mit dem darunterliegenden Teil des Ausgleichsblechs 4 einen α-förmigen Hohlraum 8, durch den das Ausgleichsmittel 4a Elastizität erhält.

Entsprechend weist die Dichtung von Fig. 3 einen elastischen Ausgleichsbereich 3, sowie einen elastischen Dichtungsbereich im Bereich der Sicken 15, 16 der Außenbleche 5, 6 auf. Der elastische Ausgleichsbereich 3 schützt dabei die Sicken 15, 16 im eingebauten Zustand vor vollständiger Abflachung und bietet während des Motorbetriebes gleichzeitig einen besseren Schutz vor Beaufschlagung der Sicken mit Verbrennungsgasen, indem er eine erste Dichtlinie bildet, die selbst elastisch ist. Dies wird mit einer Dichtung mit einer relativ geringen Anzahl an Bauteilen erreicht.

Bei den erfindungsgemäßen Dichtungen kann auch eines der beiden Außenbleche 5, 6 weggelassen werden. Beispielsweise führt das Weglassen eines der beiden Außenbleche 5, 6 in der Dichtung von Fig. 3 zu einer weiteren Reduzierung der Bauteile, was zu einer Dichtung von noch einfacherer Bauweise führt, die dennoch eine befriedigende Dichtwirkung zeigt.

Bei den in den Figuren 4 - 7 dargestellten Dichtungen ist die Lage des Ausgleichsbereich 3 nicht mehr explizit eingezeichnet. Sie bestimmt jedoch in analoger Weise wie in Fig. 2 und 3 gezeigt bzw. durch die vorstehenden Definitionen erläutert.

Die Dichtung von Fig. 4 entspricht im wesentlichen der in Fig. 3 gezeigten Dichtung. Allerdings weist sie innerhalb des Laminats zwischen dem an den Zylinderkopf angrenzenden Außenblech 5 und dem Ausgleichsblech 4 zur Dickenbildung zusätzlich ein Distanzblech 7 auf. Das Distanzblech 7 nimmt dabei mit seinem Randbereich 7a an der Bildung des Ausgleichsbereichs teil. Der umgebördelte Randbereich 4b des Ausgleichsblechs ist dabei auf das Distanzblech 7 zurückgefaltet und berührt es mit seinem Rand. Das Distanzblech 7 ragt mit seinem Randbereich 7a in den durch das Umbördeln des Randbereichs 4b gebildeten α-förmigen Hohlraum 8 hinein.

Die Dichtung von Fig. 5 entspricht im wesentlichen der in Fig. 4 dargestellten Dichtung. Das Distanzblech 7 nimmt wiederum mit seinem Randbereich 7a an der Ausbildung des Ausgleichsbereichs teil. Allerdings ist die Distanzplatte im Falle dieser Dichtung zwischen dem an den Zylinderblock angrenzenden Außenblech 6 und dem Ausgleichsblech 4 angeordnet. Auch ist der Randbereich 4b nicht auf den Randbereich 7a des Distanzblechs 7, sondern auf das Ausgleichsblech 4 zurückgefaltet. Die gewünschte Dickenbildung, die durch das Einführen des Distanzblechs 7 in das Dichtungslaminat erreicht wird, kann auch durch Verwendung mehrerer Distanzbleche erreicht werden. So ist es beispielsweise möglich, in den Dichtungen, die in Fig. 4 und 5 dargestellt sind, mehrere Distanzbleche 7 zu verwenden. Falls sehr große Bauhöhenunterschiede mittels der Einführung mehrerer Distanzbleche ausgeglichen werden sollen, ist es bevorzugt, die zusätzlichen Bleche in der in Fig. 5 dargestellten Weise in das Laminat einzufügen, das heißt, dass die Distanzbleche mit ihrem Randbereich 7a nicht in den α-förmigen Hohlraum 8 hineinragen. Die zusätzlichen Distanzplatten können in diesem Fall auch so angeordnet werden, dass sie mit ihrem Randbereich 7a mit dem Randbereich 4a des Ausgleichsblechs in Kontakt stehen.

In Fig. 6 ist eine erfindungsgemäße Dichtung dargestellt, bei der der Randbereich 7a des Distanzblechs 7 außerhalb des Ausgleichsbereiches des Laminats liegt, sich mit seinem Rand (7c) jedoch zwischen dem Ausgleichsbereich und dem durch die Sicken 15, 16 gebildeten elastischen Dichtbereich befindet. In dieser Ausführungsform sind somit nicht alle Metallblechplatten des Laminats an der Ausbildung des Ausgleichsbereiches beteiligt. Die Blechstärke des Distanzblechs 7 ist dabei geringer gewählt als die des Ausgleichsblechs 4, so dass durch das Umbördeln des Rahdbereiches 4b die Summe der Dicke der verschiedenen Blechlagen im Ausgleichsbereich größer ist als im restlichen Teil des Laminats. Die Blechstärke des Distanzblechs 7 kann sehr gering sein, oder kann sich der Blechstärke des Ausgleichsblechs 4 annähern. Durch die Wahl der Blechstärke des Distanzbleches 7 aus einem Bereich von beinahe Null bis beinahe zur Blechstärke des Ausgleichsblechs 4 kann im eingebauten Zustand der Dichtung, und bei starker Pressung, die Abflachung der Sicken 15, 16 je nach Bedarf variiert werden. Die Dichtung gemäß Fig. 6 kann zum Erreichen zusätzlicher Dickenbildung in analoger Weise wie vorstehend beschrieben mit zusätzlichen Distanzblechen versehen sein.

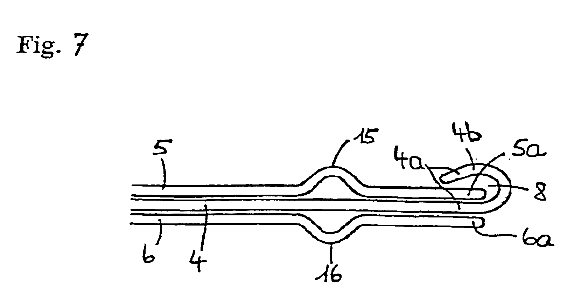

In Fig. 7 ist eine Dichtung gemäß der Erfindung dargestellt, bei der der Randbereich 5a des elastischen Außenblechs 5 durch den umgebördelten Randbereich 4b des Ausgleichsblechs 4 gegenüber dem Zylinderkopf abgedeckt wird. Der Randbereich 5a des Außenblechs ragt dabei in den α-förmigen Hohlarum 8. Ebenfalls geeignet wäre ausgehend von dieser Ausführungsform eine Dichtung, bei der der Randbereich 4b um den Randbereich 6a des Außenblechs 6 gebördelt ist, und den Randbereich 6a gegenüber dem Zylinderblock abdeckt. Bei der Dichtung von Fig. 7 sind die Sicken 15, 16 der Außenbleche so angeordnet, dass ihre Scheitelpunkte jeweils mit dem Zylinderkopf bzw. mit dem Zylinderblock in Kontakt treten. Die dargestellte Dichtung weist eine relativ geringe Anzahl von Bauteilen auf. Durch Weglassen des Außenblechs 6 kann die Bauweise noch weiter vereinfacht werden, wobei gleichwohl eine Dichtung mit befriedigenden Dichteigenschaften erhalten wird.

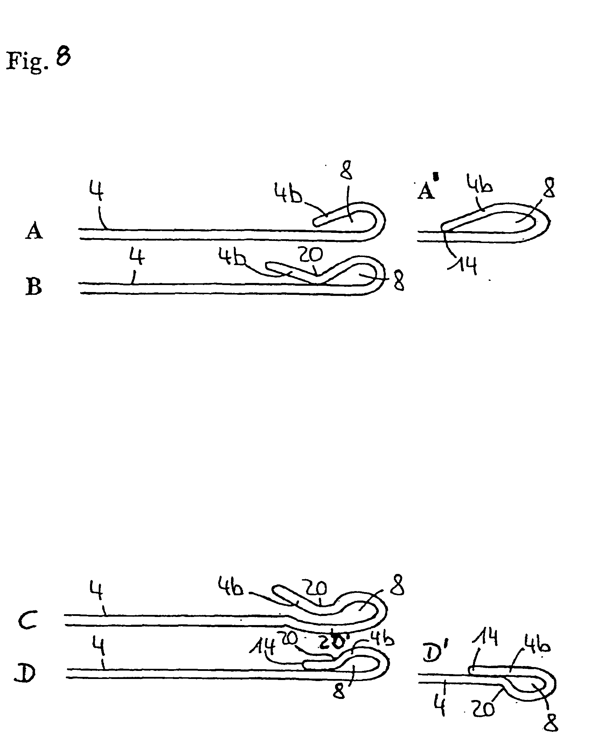

Fig. 8 zeigt Beispiele weiterer möglicher Ausführungsformen für mit Umbördelungen des Randbereichs 4b versehene Ausgleichsbleche zur Verwendung in den erfindungsgemäßen Dichtungen, etwa den in den Figuren 3-7 dargestellten Dichtungen.

Fig. 8A zeigt ein Ausgleichsblech 4 entsprechend den in den Figuren 3-7 dargestellten Ausgleichsblechen. Fig. 8A' zeigt eine Ausführungsform dieses Ausgleichsblechs, bei der Rand 14 des Randbereichs 4b in Kontakt mit dem Teil der Ausgleichsplatte 4 steht, auf den der Randbereich 4b zurückgefaltet ist.

In Fig. 8B ist eine Ausgleichsplatte dargestellt, bei der der Randbereich 4b zusätzlich mit einer V-förmigen Sicke 20 versehen ist, die durch Kantung des umgebördelten Randbereichs 4b gemäß Fig. 8A und 8A' erhalten wird. Der Scheitelpunkt der Sicke 20 steht in Kontakt mit dem darunterliegenden Teil des Ausgleichsblechs.

Fig. 8C zeigt ein Ausgleichsblech, bei dem der Bereich des Ausgleichsblechs, auf den der Randbereich 4b zurückgefaltet ist, eine flache U-förmige Sicke 20' aufweist, deren Scheitelpunkt in die in Bezug auf den Randbereich 4b entgegengesetzte Richtung zeigt. Der umgebördelte Randbereich 4b weist ebenfalls eine Sicke 20 auf, die weniger flach ist als die darunterliegende Sicke 20', und mit ihrem Scheitelpunkt in die gleiche Richtung wie die Sicke 20' zeigt. Durch die geringere Abflachung der Sicke 20 entsteht ein α-förmiger Hohlraum 8.

Fig. 8D zeigt ein Ausgleichsblech, bei dem der Randbereich 4b eine Halb-Sicke 20 aufweist, die in Richtung des Ausgleichsblechs 4 weist. Durch die Einführung der Halb-Sicke 20 steht der Rand 14 sowie der in Richtung des Übergangs in die Flachdichtung liegende Teil des Randbereichs 4b in Kontakt mit dem darunterliegenden Ausgleichsblech. Auf diese Weise wird ein α-förmiger Hohlraum 8 gebildet. In einer verwandten Ausführungsform, die in Fig. 8D' dargestellt ist, befindet sich die Halb-Sicke 20 in dem Teil des Ausgleichsblechs 4, auf den der Randbereich 4b zurückgefaltet ist. Der Randbereich 4b steht dabei mit dem Teil, der in Richtung des Übergangs in die Flachdichtung liegt, einschließlich seines Rands 14, in Kontakt mit dem darunterliegenden Ausgleichsblech und schließt mit diesem zusammen einen α-förmigen Hohlraum 8 ein.

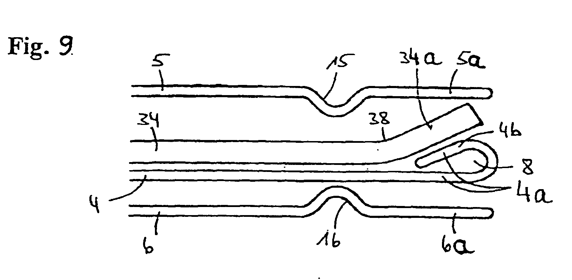

Fig. 9 zeigt, wie das Distanzblech 34 in ein erfindungsgemäßes Dichtungslaminat eingeführt werden können. Im speziell dargestellten Fall handelt es sich um ein Distanzblech 34 mit einer Kantung 38 im Bereich zwischen dem Bereich der Sicken 15, 16 und dem Ausgleichsbereich der Dichtung. Durch die Kantung 38 wird im Ausgleichsbereich der Dichtung zusätzliche Elastizität bereitgestellt. Bei dieser Dichtung ist das Distanzbleich 34 zwischen dem an dem Zylinderkopf anliegenden Außenblech 5 und dem Ausgleichsblech 4 angeordnet. Das Distanzblech 34 kann jedoch auch zwischen dem Ausgleichsblech 4 und dem an den Zylinderblock angrenzenden Außenblech 6 angeordnet werden.

## Patentansprüche

1. Metallische Flachdichtung, insbesondere Zylinderkopfdichtung, bestehend aus einem Laminat aus Lagen verschiedener Metallblechplatten, enthaltend einen rund um die Verbrennungskammeröffnung (2) des Laminats angeordneten Ausgleichsbereich (3), ein Ausgleichsblech (4) und ein Ausgleichsmittel (4a), wobei sich das Ausgleichsmittel (4a) innerhalb des Ausgleichsbereichs (3) des Laminats befindet und eine Lagendicke aufweist, die größer ist als die Lagendicke des Ausgleichsblechs (4) wie außerhalb des Ausgleichsbereichs (3), und wobei die Summe der Dicke der verschiedenen Lagen im Ausgleichsbereich (3) größer ist als im restlichen Teil des Laminats, mindestens ein elastisches Außenblech (5, 6) mit einer nahe dem Ausgleichsbereich (3) des Laminats angeordneten Sicke (15, 16), wobei der Randbereich (5a, 6a) des Außenblechs (5, 6) im Ausgleichsbereich (3) des Laminats liegt, und gegebenenfalls ein Distanzblech (7),
**dadurch gekennzeichnet, dass**
das Ausgleichsmittel (4a) durch derartiges Umbördeln eines im Ausgleichbereich (3) des Laminats gelegenen Randbereichs (4b) des Ausgleichsbleches (4), dass der umgebördelte Randbereich (4b) einen im Wesentlichen α-förmigen Hohlraum bildet, bei welchem der umgebördelte Teil des Ausgleichsbleches (4) im Wesentlichen nicht mit dem Teil des Ausgleichsbleches (4) in Kontakt ist, auf den der Randbereich (4b) durch das Umbördeln zurückgefaltet ist, und durch ein elastisches Material, insbesondere Federstahl, des Ausgleichsbleches (4) elastisch ist.

2. Flachdichtung nach Anspruch 1, **dadurch gekennzeichnet, dass** alle Metallblechplatten des Laminats an der Ausbildung des Ausgleichsbereichs (3) beteiligt sind.

3. Flachdichtung nach Anspruch 1 oder 2, **dadurch gekennzeichnet, dass** der Randbereich (5a, 6a) des Außenblechs (5, 6) nicht von einer Metallblechplatte des Laminats nach außen hin abgedeckt wird.

4. Flachdichtung nach einem der Ansprüche 1 bis 3, **dadurch gekennzeichnet, dass** das Ausgleichsmittel (4a) durch Umbördeln des im Ausgleichsbereich (3) des Laminats gelegenen Randbereichs (4b) des Ausgleichsblechs (4) gebildet wird und dass das elastische Mittel dadurch gebildet wird, dass wenigstens ein Teil des umgebördelten Randbereichs (4b) nicht mit dem Teil des Ausgleichsblechs (4) oder des Distanzblechs (7) in Kontakt steht, auf den der Randbereich (4b) durch das Umbördeln zurückgefaltet ist.

5. Flachdichtung nach Anspruch 4, **dadurch gekennzeichnet, dass** das Ausgleichsblech (4) aus einem elastischen Material besteht

6. Flachdichtung nach Anspruch 4 oder 5, **dadurch gekennzeichnet, dass** das Ausgleichsmittel (4b) mit einer Sicke (20) oder einer Kantung (22) versehen ist.

7. Flachdichtung nach einem der Ansprüche 4 bis 6, **dadurch gekennzeichnet, dass** der umgebördelte Randbereich (4b) des Ausgleichsblechs (4) eine Einlage (24) aus einem elastischen Dichtungsmaterial einschließt.

8. Flachdichtung nach einem der Ansprüche 1 bis 7, **dadurch gekennzeichnet, dass** sie zusätzlich ein Distanzblech (34) aufweist, das in seinem im Bereich der Verbrennungskammeröffnung gelegenen Randbereich (34a) mit einem elastischen Mittel versehen ist.

9. Flachdichtung nach Anspruch 8, **dadurch gekennzeichnet, dass** das elastische Mittel, mit dem der Randbereich (34a) des Distanzblechs (34) versehen ist, durch eine Sicke (36, 36', 43) oder eine Kantung (38) gebildet wird.

10. Flachdichtung nach Anspruch 9, **dadurch gekennzeichnet, dass** das Distanzblech (34) aus einem elastischen Material besteht.

11. Flachdichtung nach Anspruch 8, **dadurch gekennzeichnet, dass** das elastische Mittel, mit dem der Randbereich (34a) des Distanzblechs (34) versehen ist, durch eine Auflage aus elastomerem Dichtmaterial (40) gebildet wird.

12. Flachdichtung nach Anspruch 8, **dadurch gekennzeichnet, dass** das elastische Mittel plastisch verformbare Mittel aufweist.

13. Flachdichtung nach einem der Ansprüche 1 bis 7, **dadurch gekennzeichnet, dass** sie zusätzlich ein Distanzblech aufweist, das in seinem im Bereich der Verbrennungskammeröffnung gelegenen Randbereich mit einem plastisch verformbaren Mittel versehen ist.

## Claims

1. A metallic flat seal, in particular a piston head gasket, consisting of a laminate of layers of various sheet metal plates, containing an equalizing region (3) provided around the combustion chamber opening (2) of said laminate, an equalizing metal sheet (4) and an equalizing means (4a), which equalizing means (4a) is situated within said equalizing region (3) of said laminate and has a layer thickness which is higher than the layer thickness of said equalizing metal sheet (4) as outside said equalizing region (3), and wherein the sum of the thickness of the various layers is higher in the equalizing region (3) than in the remaining part of the laminate, at least one resilient external metal sheet (5, 6) having a bead (15, 16) provided adjacent said equalizing region (3) of said laminate, with the edge region (5a, 6a) of said external metal sheet (5, 6) being in the equalizing region (3) of said laminate, and if necessary a spacer plate (7),
**characterized in that**
said equalizing means (4a) is made resilient by beading an edge region (4b) of said equalizing metal sheet (4) situated within said equalizing region (3) of said laminate such that said beaded edge region (4b) will form an essentially V shaped cavity in which said beaded part of said equalizing metal sheet (4) will essentially not contact the part of said equalizing metal sheet (4) onto which the edge region (4b) has been folded back by the beading, and by a resilient material, in particular spring steel, of said equalizing metal sheet (4).

2. The flat seal as claimed in claim 1 **characterized in that** all sheet metal plates of said laminate are involved in the formation of said equalizing area (3).

3. The flat seal as claimed in claims 1 or 2 **characterized in that** the edge region (5a, 6a) of the external sheet metal (5, 6) is not covered toward the exterior by a sheet metal plate of said laminate.

4. The flat seal as claimed in one of claims 1 to 3 **characterized in that** said equalizing means (4a) is formed by beading the edge region (4b) of said equalizing metal sheet (4) situated in the equalizing region (3) of said laminate and that said resilient means is formed by having at least part of said beaded edge region (4b) not contact the part of the equalizing metal sheet (4) or the spacer sheet (7) onto which said edge region (4b) has been folded back by the beading.

5. The flat seal as claimed in claim 4 **characterized in that** said equalizing metal sheet (4) is made of a resilient material.

6. The flat seal as claimed in claims 4 or 5 **characterized in that** said equalizing means (4b) is provided with a bead (20) or a folded portion (22).

7. The flat seal as claimed in one of claims 4 to 6 **characterized in that** the beaded edge area (4b) of said equalizing metal sheet (4) includes an insert (24) made of a resilient sealing material.

8. The flat seal as claimed in one of claims 1 to 7 **characterized in that** it additionally includes a spacer plate (34) which is provided with a resilient means in its edge region (34a) situated in the region of the combustion chamber opening.

9. The flat seal as claimed in claim 8 **characterized in that** said resilient means provided on said edge region (34a) of said spacer plate (34) is formed by a bead (36, 36', 43) or a folded portion (38).

10. The flat seal as claimed in claim 9 **characterized in that** said spacer plate (34) is made of a resilient material.

11. The flat seal as claimed in claim 8 **characterized in that** said resilient means provided on said edge region (34a) of said spacer plate (34) is formed by a layer of an elastomer sealing material (40).

12. The flat seal as claimed in claim 8 **characterized in that** said resilient means includes plastically deformable means.

13. The flat seal as claimed in one of claims 1 to 7 **characterized in that** it additionally includes a spacer plate which is provided with a plastically deformable means in its edge region situated in the region of the combustion chamber opening.

## Revendications

1. Joint plat métallique, en particulier joint de culasse, constitué d'un laminé composé de couches de différentes plaques de tôle métallique comportant une zone de compensation (3) disposée tout autour de l'ouverture de la chambre de compensation (2) du laminé, une tôle de compensation (4) et un moyen de compensation (4a), le moyen de compensation (4a) se trouvant à l'intérieur de la zone de compensation (3) du laminé et présentant une épaisseur de couche supérieure à l'épaisseur de couche de la tôle de compensation (4) comme à l'extérieur de la zone de compensation (3) et la somme des épaisseurs des différentes couches dans la zone de compensation (3) étant plus importante que dans la partie restante du laminé, au moins une tôle extérieure élastique (5, 6) avec une moulure (15, 16) disposée à proximité de la zone de compensation (3) du laminé, la zone marginale (5a, 6a) de la tôle extérieure (5, 6) étant située dans la zone de compensation (3) du laminé et, le cas échéant, un distanceur (7), **caractérisé en ce que**
le moyen de compensation (4a) est élastique grâce au rabattement des bords d'une zone marginale (4b), située dans la zone de compensation (3) du laminé, de la tôle de compensation (4) de manière à ce que la zone marginale (4b) non rabattue forme un espace creux essentiellement de forme α dans lequel la partie non rabattue de la tôle de compensation (4) n'est essentiellement pas en contact avec la partie de la tôle de compensation (4) sur laquelle la zone marginale (4b) est repliée par le rabattement des bords, et grâce à une matière élastique, en particulier un acier à ressorts, de la tôle de compensation (4).

2. Joint plat selon la revendication 1, **caractérisé en ce que** toutes les plaques de tôle métallique du laminé interviennent dans la formation de la zone de compensation (3).

3. Joint plat selon la revendication 1 ou 2, **caractérisé en ce que** la zone marginale (5a, 6a) de la tôle extérieure (5, 6) n'est pas recouverte vers l'extérieur par une plaque de tôle métallique du laminé.

4. Joint plat selon l'une quelconque des revendications 1 à 3, **caractérisé en ce que** le moyen de compensation (4a) est formé par rabattement des bords de la zone marginale (4b), située dans la zone de compensation (3) du laminé, de la tôle de compensation (4) et **en ce que** le moyen élastique est formé par le fait qu'au moins une partie de la zone marginale (4b) non rabattue n'est pas en contact avec la partie de la tôle de compensation (4) ou du distanceur (7) sur laquelle la zone marginale (4b) est repliée par rabattement des bords.

5. Joint plat selon la revendication 4, **caractérisé en ce que** la tôle de compensation (4) est constituée d'une matière élastique.

6. Joint plat selon la revendication 4 ou 5, **caractérisé en ce que** le moyen de compensation (4b) est doté d'une moulure (20) ou d'une arête (22).

7. Joint plat selon l'une quelconque des revendications 4 à 6, **caractérisé en ce que** la zone marginale (4b) non rabattue de la tôle de compensation (4) renferme un insert (24) constitué d'une matière d'étanchéité élastique.

8. Joint plat selon l'une quelconque des revendications 1 à 7, **caractérisé en ce qu'**il présente en plus un distanceur (34) qui est doté d'un moyen élastique dans sa zone marginale (34a) située dans la zone de l'ouverture de la chambre de combustion.

9. Joint plat selon la revendication 8, **caractérisé en ce que** le moyen élastique, dont est dotée la zone marginale (34a) du distanceur (34) est formé d'une moulure (36, 36', 43) ou d'une arête (38).

10. Joint plat selon la revendication 9, **caractérisé en ce que** le distanceur (34) est constitué d'une matière élastique.

11. Joint plat selon la revendication 8, **caractérisé en ce que** le moyen élastique, dont est dotée la zone marginale (34a) du distanceur (34), est formé par une couche de matière d'étanchéité élastomère (40).

12. Joint plat selon la revendication 8, **caractérisé en ce que** le moyen élastique présente des moyens à déformation plastique.

13. Joint plat selon l'une quelconque des revendications 1 à 7, **caractérisé en ce qu'**il présente en plus un distanceur qui est doté, dans sa zone marginale située dans la zone de l'ouverture de la chambre de combustion, d'un moyen à déformation plastique.
